(19) Europäisches Patentamt / European Patent Office / Office européen des brevets

(11) **EP 2 353 063 B1**

(12) **EUROPEAN PATENT SPECIFICATION**

(45) Date of publication and mention
of the grant of the patent:
**11.01.2017  Bulletin 2017/02**

(21) Application number: **09826255.3**

(22) Date of filing: **10.11.2009**

(51) Int Cl.:
***G06F 3/033*** (2013.01)

(86) International application number:
**PCT/KR2009/006571**

(87) International publication number:
**WO 2010/056023 (20.05.2010 Gazette 2010/20)**

(54) **METHOD AND DEVICE FOR INPUTTING A USER'S INSTRUCTIONS BASED ON MOVEMENT SENSING**

VERFAHREN UND VORRICHTUNG ZUR EINGABE VON BENUTZERANWEISUNGEN AUF BEWEGUNGSERFASSUNGSBASIS

PROCÉDÉ ET DISPOSITIF POUR ENTRER LES INSTRUCTIONS D'UN UTILISATEUR SUR LA BASE DE LA DÉTECTION DE MOUVEMENT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.11.2008  KR 20080113610**
**30.03.2009  KR 20090027100**

(43) Date of publication of application:
**10.08.2011  Bulletin 2011/32**

(73) Proprietor: **Microinfinity, Inc.**
**Gyeonggi-do 443-270 (KR)**

(72) Inventors:
• **PARK, Kyu-Cheol**
**Seoul 137-070 (KR)**
• **LEE, Jung-Hwan**
**Anyang-si**
**Gyeonggi-do 431-050 (KR)**

• **PARK, Won-Jang**
**Seoul 156-090 (KR)**
• **SAKONG, Byung-Chun**
**Suwon-si**
**Gyeonggi-do 443-270 (KR)**
• **KIM, Sang-Bum**
**Seoul 122-070 (KR)**
• **YANG, Woo-Hee**
**Suwon-si**
**Gyeonggi-do 443-270 (KR)**

(74) Representative: **Gulde & Partner**
**Patent- und Rechtsanwaltskanzlei mbB**
**Wallstraße 58/59**
**10179 Berlin (DE)**

(56) References cited:
**JP-A- 10 301 704          JP-A- 2004 053 530**
**KR-A- 20010 083 525     KR-A- 20030 009 577**
**KR-A- 20060 081 509     US-A1- 2005 212 767**

## Description

### Technical Field

Methods and apparatuses consistent with the present invention relate to a user instruction input device including a movement sensor. More particularly, the present invention relates to a user instruction input device capable of inputting user instructions naturally and accurately based on device movements in a three-dimensional space.

### Background Art

As computer science develops, various devices that allow users to input information in a computer device have been developed. One of such devices is called a user command input device. As a user manipulates such device components, position data corresponding to motion of the user command input device are generated. Also, such position data are converted into motions of a pointer image shown on the display. Hence, by moving the user command input device, the user may link the pointer image with objects displayed on the display. Here, an object refers to a user interface that allows a certain action to be performed when a menu, a button or an image is selected. After that, the user can perform a certain command related with the corresponding object through a selection action such as pushing a certain button of the user command input device.

General personal computer users use operating systems with graphical user interfaces, such as Microsoft Windows and MAC OS X, to operate their computer. This is due to convenient mouse functions and various graphic functions that are not supported in console based operating systems such as DOS (Disk Operating System) system and some UNIX versions, and users can simply input commands through a mouse dragging, scrolling or a click without a keyboard input.

On the other hand, various commands are inputted using a key pad prepared on a remote control device in an image display device that cannot use a keyboard or a mouse that is used in a personal computer, such as a digital TV, a set-top box, a game machine. Such a key pad input method has been mainly used because such devices are not fixed on a certain position for the operation of the device unlike a personal computer, and operation is necessary in an open space such as a living room, so it is difficult to use an input means fixed on a plane such as a keyboard or mouse.

US 2005/212767 A1 (29 September 2005) discloses a motion controlled hand-held device including a display which generates an image and a gesture database maintaining a plurality of gestures. Each gesture is defined by a motion of the device with respect to a first position of the device. The device includes a motion detection module operable to detect motion of the hand-held device within a three-dimensional space and to identify components of the motion in relation to the viewable surface.

Moreover, the following textbook knowledge is assumed as representing prior art: in a three-dimensional space, it is a mechanical axiom that the position of a three-dimensional rigid body is defined a rigid transformation involving a three-dimensional translation and rotation matrix, which has three translational degrees of freedom and three rotational degrees of freedom; when a movement of a rigid body is involved, given an initial attitude and the data concerning the velocities or accelerations (proportional to forces), it is a matter of solving, e.g. by means of numerical approximate methods, a system of differential equations to arrive at the position and rotation of the device.

### Disclosure of Invention

### Technical Problem

Considering such problems, three-dimensional user command input devices with a motion sensor such as a gyroscope and an accelerometer are recently being developed. By moving a three-dimensional user command input device, a user can move a pointer image on the corresponding display in a desired direction and at a desired speed, and by pushing a certain button on the user command input device, the user can select and execute a desired action.

However, unlike a technology that inputs user commands through actions on a fixed two-dimensional plane as in a mouse, it is not easy to transmit natural and accurate motions in a user command input device that moves a pointer or a certain object (e.g., a game unit) through an arbitrary action in a three-dimensional space. It is because motions that have not been intended by the user may be transmitted depending on the pose, orientation or distance toward the device.

In fact, inventions about measuring three-dimensional motions using accelerometers and angular rate sensors have been made since 1980s. The present invention does not simply intend to implement an input device using an accelerometer and an angular rate sensor, but intends to implement an input device that naturally fits the user's intention with a compact system (i.e., a system that uses a small amount of operations).

**Solution to Problem**

An objective of the present invention is to input user instructions more naturally and accurately in a device that inputs user instructions through arbitrary movements in a three-dimensional space.

The present invention will not be limited to the technical objectives described above. Other objectives not described herein will be more definitely understood by those in the art from the following detailed description.

According to an exemplary embodiment of the present invention, there is provided a user instruction input device comprising an angular rate sensor adapted to sense an angular rate at which the device rotates in the body frame to provide a first output; an acceleration sensor adapted to sense an acceleration of the device in the body frame to provide a second output; a processing unit adapted to calculate a first rotation angle in the navigation frame from the first output of the angular rate sensor, calculate a second rotation angle in the navigation frame from the second output of the acceleration sensor, and obtain an attitude angle estimate by computing a weighted average of the first rotation angle and the second rotation angle, wherein the processing unit is further adapted to determine a first weight for the first rotation angle and a second weight for the second rotation angle based on one of the first output, the second output and a combination thereof, such that the first and second weights satisfy the conditions that (i) the first and second weights are greater than or equal to 0 and less than or equal to 1, (ii) a sum of the first and second weights is equal to 1, and (iii) as said one of the first output, the second output and the combination thereof becomes larger, the second weight becomes smaller, and wherein the processing unit is further adapted to compute the weighted average with the determined first and second weights.

**Brief Description of Drawings**

The above and other features and advantages of the present invention will become apparent by describing in detail preferred embodiments thereof with reference to the attached drawings in which:

FIG. 1 illustrates a three-axis rotation angle defined in a certain frame.
FIG. 2 is a block diagram illustrating a user instruction input device according to an exemplary embodiment of the present invention.
FIG. 3 illustrates a method of measuring a roll value using an accelerometer according to an exemplary embodiment of the present invention.
FIG. 4 illustrates a method of calculating a yaw value using the pitch and roll values in the method of measuring a yaw angle according to an exemplary embodiment of the present invention.
FIGS. 5 to 7 show the case when $\omega x$ is used and the case when $\omega x$ is not used in equation 5.
FIG. 8 is flowchart estimating movements of the device using a movement estimation function.
FIG. 9 shows a bell-shaped curve as a movement estimation function.
FIG. 10 shows an exponential function used as a movement estimation function.
FIGS. 11, 12 and 13 show a mapping function according to an exemplary embodiment of the present invention.
FIGS. 14 and 16 show examples of applying a mapping scale regarding pitch-direction rotations.
FIGS. 17 and 18 show examples of applying a mapping scale regarding yaw-direction rotations.
FIG. 19 shows the agreement between the starting point of a body frame and the starting point of a navigation frame.
FIG. 20 shows the disagreement between the starting point of a body frame and the starting point of a navigation frame.

**Mode for the Invention**

Exemplary embodiments of the present invention will be described in detail with reference to the accompanying drawings.

Advantages and features of the present invention and methods of accomplishing the same may be understood more readily by reference to the following detailed description of the exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims.

In the present invention, a user instruction input device refers to an interface device that makes various contents intuitively available by receiving the input of the user's movements. The device makes the information obtained through the user's movements correspond to information that is necessary for various information devices or various services. Some examples of such devices are a three-dimensional space mouse, an IPTV (Internet protocol TV) remote control and a game input device.

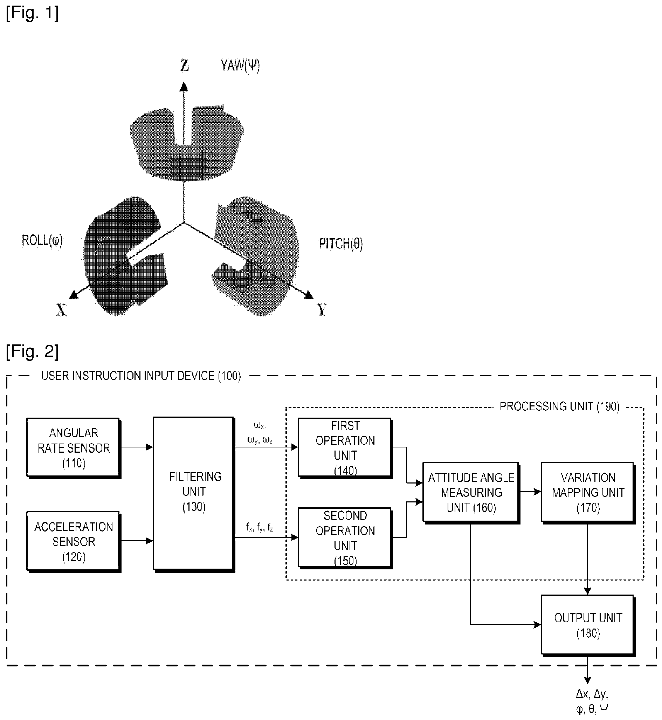

FIG. 1 illustrates a three-axis rotation direction defined in a certain frame (coordinate system). In a certain frame consisting of x, y and z axes, a pitch ($\theta$) refers to a rotation in y-axis direction, a roll($\varphi$) refers to a rotation in x-axis direction, and a yaw ($\psi$) refer to a rotation in z-axis direction. Whether a rotation is positive (+) or negative (-) is determined by a right-handed coordinate. The present invention mentions two frames of a navigation frame and a body frame. The navigation frame is fixed on space and refers to a standard coordinate system consisting of three axes of $X_N$, $Y_N$ and $Z_N$. That is, the navigation frame is independent of the attitude of a device. Further, the body frame refers to a relative coordinate system that exists on an object placed in three-dimensional space and consists of three axes of $X_B$, $Y_B$ and $Z_B$. In FIG. 1, x-direction refers to a standard direction where the user instruction input device is toward. That is, it is a roll direction if a rotation is made based on the axis toward the standard direction.

FIG. 2 is a block diagram illustrating a user instruction input device 100 according to an exemplary embodiment of the present invention. The user instruction input device 100 can control an object on at least one display device (not shown). The object may be a pointer on a display or may be an object while playing a game. Also the display device may be installed on a separately fixed position, but it may also be integrated with the user instruction input device 100 (e.g., a portable game machine).

As a more specific example, the user instruction input device 100 may include an angular rate sensor 110, an acceleration sensor 120, a filtering unit 130, a processing unit 190 and an output unit 180. Further, the processing unit 190 may include a first operation unit 140, a second operation unit 150, a attitude angle measuring unit 160 and a variation mapping unit 170.

The angular rate sensor 110 senses an angular rate at which the device 100 rotates on the body frame, and provides a sampled output value (digital value). A gyroscope can be used as angular rate sensor 110, and various types of gyroscopes such as a mechanical type, a fluid type, an optical type and a piezoelectric type. Specifically, the angular rate sensor 110 can obtain rotational angular rates for two axes (axes on the body frame) that cross at right angles, e.g., a rotational angular rate ($\omega_x$, $\omega_y$, $\omega_z$) on x-axis, y-axis and z-axis of the body frame.

The acceleration sensor 120 senses the acceleration of the device 100 on the body frame and provides a sampled output value (digital value). The acceleration sensor 120 can be a piezoelectric type or a moving coil type. Specifically, the angular rate sensor 110 calculates the straight line acceleration ($f_x$, $f_y$, $f_z$) for three axes that cross at right angles (axes on the body frame).

The filtering unit 130 may consist of a low pass filter, a high pass filter, a offset filter or a scaling filter depending on the usage of the device 100, compensates for the error after receiving the output of the angular sensor 110 and the output of the acceleration sensor 120. The filtering unit 130 provides the error-compensated rotational angular rate ($\omega_x$, $\omega_y$, $\omega_z$) to the first operation unit 140 and provides the error-compensated acceleration speed ($f_x$, $f_y$, $f_z$) to the second operation unit 150.

The second operation unit calculates the roll, pitch and yaw of the navigation frame ($\varphi_{XL}$, $\theta_{XL}$, $\psi_{XL}$) (the second rotational angle) using the straight line angular rate ($f_x$, $f_y$, $f_z$) provided from the filtering unit 130. A specific example of the calculation is shown in the following.

### Equation 1

$$\phi_{XL} = \arctan 2\left(\frac{f_y}{f_z}\right)$$

$$\theta_{XL} = \arctan 2\left(\frac{-f_x}{\sqrt{f_y^2 + f_z^2}}\right)$$

$$\psi_{XL} = \frac{\phi_{XL}}{\sin(\theta_{XL})}$$

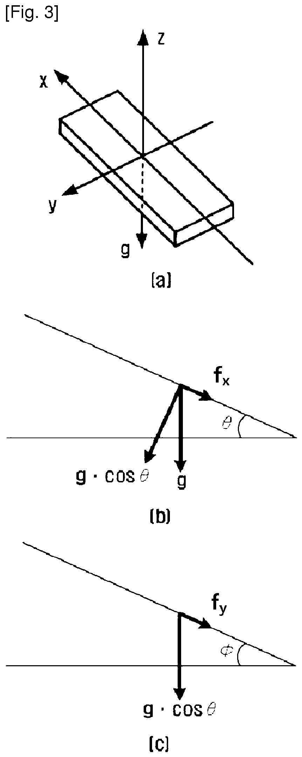

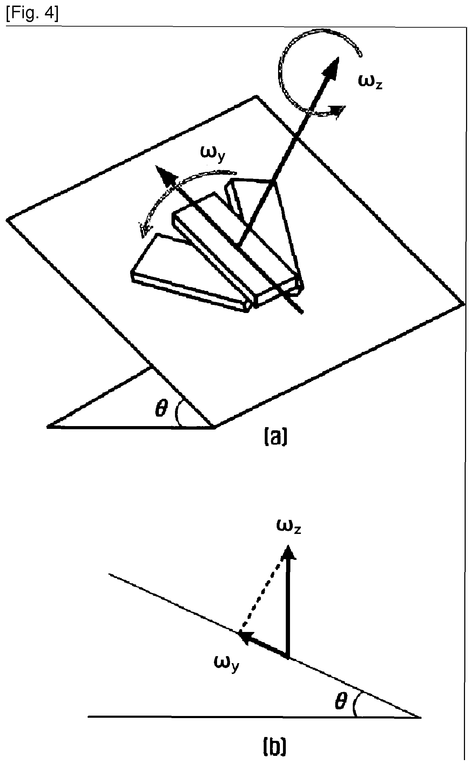

Generally, the roll and the pitch ($\varphi_{XL}$, $\theta_{XL}$) can be simply calculated using the acceleration, but it is not easy to get the yaw. The yaw ($\psi_{XL}$) calculated from the acceleration in the present invention is a pseudo yaw and can be explained with reference to FIGS. 3 and 4.

FIG. 3 illustrates a method of measuring the roll value using the accelerometer according to an exemplary embodiment of the present invention. Assuming that the direction acceleration speed is fy, and the pitch has already been generated, the vertical element of acceleration of gravity becomes g·cosθ in (b) of FIG. 3. Hence, the equation of the roll is as follows.

## Equation 2

$$\phi = \arcsin\left(\frac{f_y}{g \cdot \cos\theta}\right)$$

The method of measuring the roll value using the accelerometer can be calculated in various methods.

FIG. 4 illustrates a method of calculating a yaw value using the pitch and the roll values in the method of measuring the yaw angle according to an exemplary embodiment of the present invention. (a) of FIG. 4 shows a vector direction of the roll and yaw angular rate based on the generation of the pitch. In (a) of FIG. 4, $\omega_y$ represents the roll angular rate vector, and $\omega_z$ represents the yaw angular rate vector. The yaw angular rate vector is not the actual yaw vector, but the projected vector of the actual yaw vector.

(b) of FIG. 4 illustrates (a) of FIG. 4 from the side. In (b) of FIG. 4, assuming that the time is "t," the following equation 3 is established among the roll angular rate vector $\omega_y$, the yaw angular rate vector $\omega_z$ and the pitch ($\theta$).

## Equation 3

$$\sin\theta(t) = \frac{\omega_y(t)}{\omega_z(t)}$$

From the above equation 3, the yaw ($\Psi$) can be approximated as shown in the equation 4.

## Equation 4

$$\psi = \int \omega_z dt = \int \frac{\omega_y(t)}{\sin\theta(t)} \cong \frac{1}{\sin\theta}\int \omega_y(t) = \frac{\phi}{\sin\theta}$$

Equation 4 cannot be applied if pitch $\theta$ is close to 0° or 90°, so a certain restriction should be given at such angles. The actually measured yaw values in each condition using equation 4 are shown in the following.

[Table 1]

[Table 1]

| [Table] | | | | |
|---|---|---|---|---|
| Pitch ($\theta$) | Yaw ($\Psi$) measured at (-) pitch | | Yaw ($\Psi$) measured at (+) pitch | |
| | roll $\Phi$ = -80 | roll $\Phi$ = +80 | roll $\Phi$ = -80 | roll $\Phi$ = +80 |
| 10 | Strange movement | Strange movement | -414 | 383 |
| 20 | -222 | 243.5 | -221 | 241.5 |
| 40 | -120 | 125 | -122 | 127 |
| 60 | -89 | 91.5 | -92 | 94.5 |
| 80 | -72.5 | 77 | -8.3 | 84.5 |

As shown in the above table, as the roll change, the yaw value changes, so the scale elements can be used to reduce such differences. Consequently, in the situation when there is a pitch value and both the roll value and the yaw value change, it is possible to calculate the approximate value for the yaw.

The first operation unit 140 calculates the rotation angle ($\varphi_G$, $\theta_G$, $\psi_G$) (the first rotation angle) of three axes in the navigation frame using angular rate ($\omega_x$, $\omega_y$, $\omega_z$) value provided from the filtering value 130. The specific equation using the Euler angle is shown in equation 5. Equation 5 has a form of a differential equation for the rotation angle ($\varphi_G$, $\theta_G$, $\psi_G$) in the navigation frame.

Equation 5

$$\dot{\phi}_G = (\omega_y \sin \phi_G + \omega_z \cos \phi_G) \tan \theta_G + \omega_x$$

$$\dot{\theta}_G = (\omega_y \cos \phi_G - \omega_z \sin \phi_G)$$

$$\dot{\psi}_G = \frac{\omega_y \sin \phi_G + \omega_z \cos \phi_G}{\cos \theta_G}$$

Generally, the attitude angle in the navigation frame can be obtained using three angular rates. The desirable embodiment of the present invention calculates angular rates of three axes in the navigation frame using only two angular rates ($\omega_y$, $\omega_z$), and here $\omega_x$ of equation 5 is a problem.

General hand and arm movements of a person are often based on a single axis in a three-axis coordinate system. Some such examples are rotation on Z-axis and rotation in Y-axis direction. Also, even though there are two or more composite movements at the same time, there is a tendency that when X-axis and Y-axis rotations of the body frame and X-axis and Z-axis rotations of the body frame occur at the same time, movements in X-axis direction becomes relatively smaller than those in Y-axis and Z-axis directions.

Hence, in equation 5, $\omega_x$ in X-axis direction becomes relatively smaller than that in Y-axis direction or Z-axis direction, so $\omega_x$ may be disregarded, but the calculation is not done accurately. However, if the roll ($\varphi_{XL}$) information calculated by the accelerometer is appropriately used, a performance, which is similar to that when the angular rate of $\omega_x$ is used, can be secured.

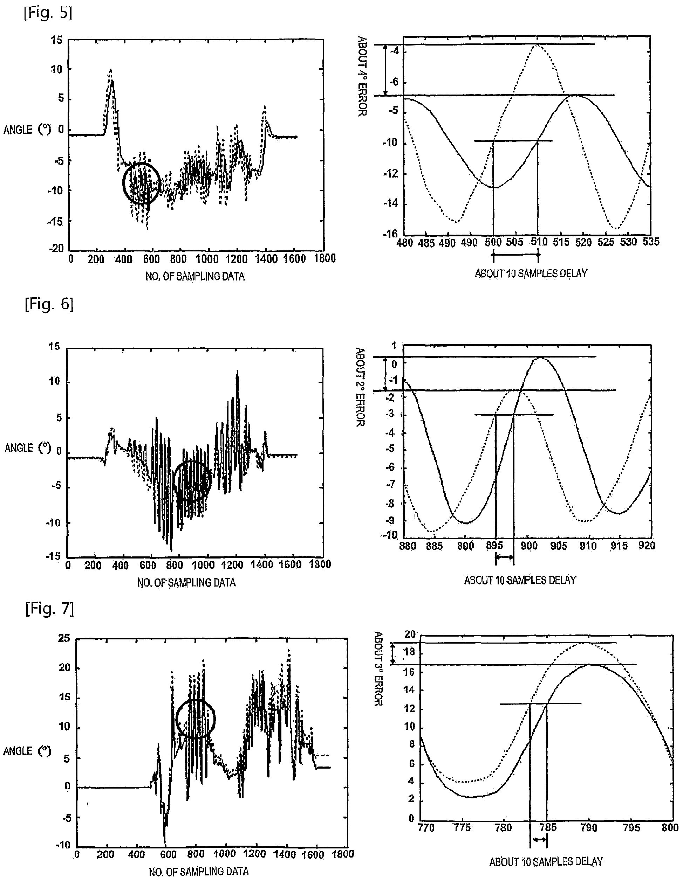

FIGS. 5-7 are the result of comparing the case of using $\omega_x$ (dotted line) and the case of not using $\omega_x$ (solid line). X-axis refers to the number of unit samples, and Y-axis refers to the angle. Also, the right side graph of each drawing is an extended view of a certain section indicated by a circle in the left side graph. When $\omega_x$ is removed, there is an 2° ~ 4° difference and a delay of 2 to 10 samples than when $\omega_x$ is not removed. However, if the calculation period is more than 100Hz, the angular difference and the delay are not easily distinguishable by the user, so there is no significant difference in the result between when using the angular rate for two axes (Y-axis angular rate and Z-axis angular rate of the body frame) and when using the angular rate for three axes.

Based on such an experiment result, equation 5 can be transformed to the following equation 6.

Equation 6

$$\dot{\phi}_G = (\omega_y \sin \phi_G + \omega_z \cos \phi_G) \tan \theta_G$$

$$\dot{\theta}_G = (\omega_y \cos \phi_G - \omega_z \sin \phi_G)$$

$$\dot{\psi}_G = \frac{\omega_y \sin \phi_G + \omega_z \cos \phi_G}{\cos \theta_G}$$

Further, if a pattern when a person grabs the input device and moves is recognized in advance and is utilized, even $\omega_y$ can be removed. Here, as in equation 1, errors generated by not using $\omega_y$, $\omega_z$ can be overcome by using ($\varphi_{XL}$, $\theta_{XL}$, $\psi_{XL}$) calculated using the output of the accelerometer.

Equations 5 and 6 illustrate the calculation of the rotation angle ($\varphi_G$, $\theta_G$, $\psi_G$) of three axes in the navigation frame from the angular rate ($\omega_y$, $\omega_z$) based on the Euler angle representation, but the calculation may be performed based on the more involved quaternion angle representation instead of Euler angle.

Referring to FIG. 2, the attitude angle measuring unit 160 calculates the weighted average of three rotation angles ($\varphi_{XL}$, $\theta_{XL}$, $\psi_{XL}$) on the navigation frame obtained from the second operation unit 150 and the three rotation angles ($\varphi_G$, $\theta_G$, $\psi_G$) on the navigation frame obtained from the first operation unit 140, and calculates the attitude angle ($\varphi$, $\theta$, $\psi$) in the navigation frame. The specific weighted average can be calculated according to the following equation 7.

## Equation 7

$$\phi = \alpha_1 \cdot \phi_{XL} + (1 - \alpha_1) \cdot \phi_G$$
$$\theta = \alpha_2 \cdot \theta_{XL} + (1 - \alpha_2) \cdot \theta_G$$
$$\psi = \alpha_3 \cdot \psi_{XL} + (1 - \alpha_3) \cdot \psi_G$$

Here, $\alpha1$, $\alpha2$ and $\alpha3$ are weights for $\varphi$, $\theta$ and $\psi$, respectively. The above process to calculate the attitude angle in the navigation is just an example, but various other ways can be used to calculate the attitude angle. For example, $\psi_{XL}$ used in equation 1 can be calculated using a magnetic sensor or an image sensor. According to the magnetic sensor or the image sensor, because a reentering angle in the navigation frame can be directly calculated, a transformation process as in equation 1 used in the acceleration sensor is not necessary.

If $\psi_{XL}$ is not calculated from the third formula of equation 1, i.e., $\theta_{XL}=0$, by setting $\alpha_3$ to 1, $\psi$ can be calculated only by $\psi_G$ without using $\psi_{XL}$.

However, in order to calculate the final attitude angle ($\varphi$, $\theta$, $\psi$) more accurately, $\alpha_1$, $\alpha_2$ and $\alpha_3$ need to be adaptively determined rather than arbitrarily determined. For this, the "attitude angle measuring" angle 160 can use a movement estimation function.

The movement estimation function refers to a function that detects detailed movements by normalizing movements to the range between 0 and 1 based on data using the outputs of the angular rate sensor and the acceleration sensor. As an example, in the case where movements of the detected device 100 are hardly noticeable, the value of the acceleration sensor 120 is more reliable, so the mapping is done so that $\alpha_n=1$, and in the case where the movements are the maximum state, the value of the angular rate sensor 110 is more reliable, so the mapping is done so that $\alpha_n=0$. In the case where the movements are between the hardly noticeable state and the maximum state, the mapping should be done with an appropriate value.

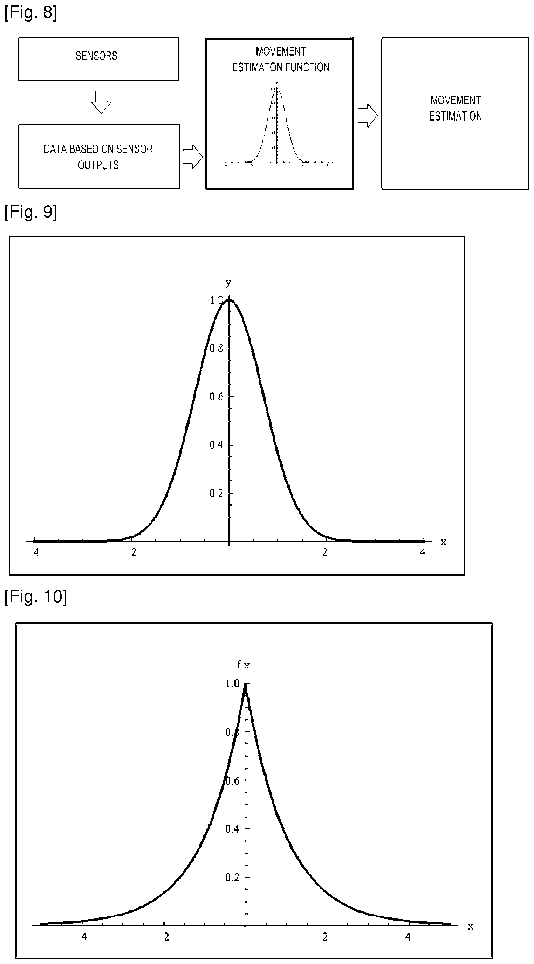

FIG. 8 is a flowchart for estimating movements of a device 100 using a movement estimation function. A bell shape curve or an exponential function may be used as a movement estimation function. The bell shape curve, as a curve in the form shown in FIG. 9, may be expressed by Gaussian function, a raised cosine function, etc. Further, the exponential function has the form shown in FIG. 10, and is, e.g.,

$$y = e^{-|x|}$$

. In FIGS. 9 and 10, x-axis represents the size of movements of the device 100, and y-axis represents the weight in equation 7, i.e., $\alpha_n$. Functions of FIGS. 9 and 10 commonly have the peak value in the center, and have the form approaching 0 as they go right or left.

By using such a movement estimation function, detailed movements such as stoppage, minute movements, slow movements and fast movements can be detected in addition to detecting whether the device 100 has stopped. Further, by measuring such movements, the basis for removing unintended movements (e.g., a cursor movement by a trembling of a hand) can be provided. Further, it is possible to adjust the scale of a mapping function according to the size of movements, which will be explained later.

Referring to FIG. 2 once again, in the variation mapping unit 170 the attitude angle ($\varphi$, $\theta$, $\psi$) itself obtained in the attitude angle measuring unit 160 can be used in controlling the object of a display device. For example, in a flying object in a flight simulation, each axis direction rotation can be controlled by the attitude angle. Further, a pointer existing on the two-dimensional screen of the display device needs to be mapped with the variation (displacement) of the attitude angle ($\varphi$, $\theta$, $\psi$) of such a navigation coordinate system. As an example, in order to express natural movements of a pointer control device, horizontal movements ($\Delta x$) on the display screen need to correspond to the variation ($\Delta\psi$) of the yaw, and vertical movements need to correspond to the variance ($\Delta\theta$) of the pitch.

Such a relation can be expressed as the following equation 8.

## Equation 8

$$\Delta\psi = \psi_k - \psi_{k-1}$$
$$\Delta\theta = \theta_k - \theta_{k-1}$$

Here, "k" is an index that indicates a certain sampling time point.

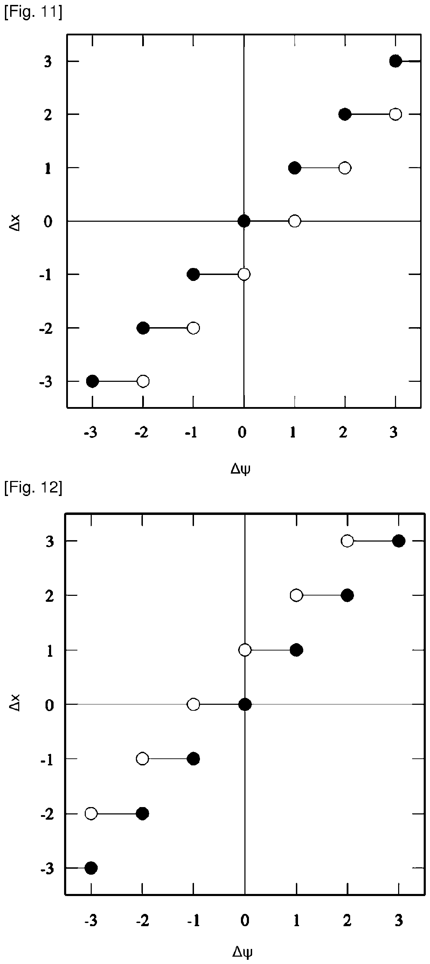

In order to define such a correspondence relation, the present invention introduces a mapping function. FIGS. 11 and 12 illustrate examples of various mapping functions and show correspondence between horizontal movements ($\Delta x$) and variation of the yaw ($\Delta \psi$). The same is applied to the correspondence between vertical movements ($\Delta y$) and the variation of the pitch ($\Delta \theta$).

FIGS. 11 and 12 show examples of simple mapping functions. Here, FIG. 11 shows a floor function having the form of

$$f(t) = \lfloor kt \rfloor \, ,$$

and FIG. 12 shows a ceiling function having the form of

$$f(t) = \lceil kt \rceil \, .$$

Such mapping functions can make the variation of the yaw or the pitch correspond to horizontal movements or vertical movements on the display by a simple relation. Here, the input value of functions can be reduced or removed depending on the change of "K", and an input value more than a certain value can be converted into a proportional output value. However, the mapping functions such as FIGS. 11 and 12 have a disadvantage that output values cannot be appropriately limited for excessive input values more than a certain value. That is, the mapping function of FIGS. 11 and 12 do not have the function of the limitation area among the functions of the depression area, the scaling area and the limitation area included in the mapping function.

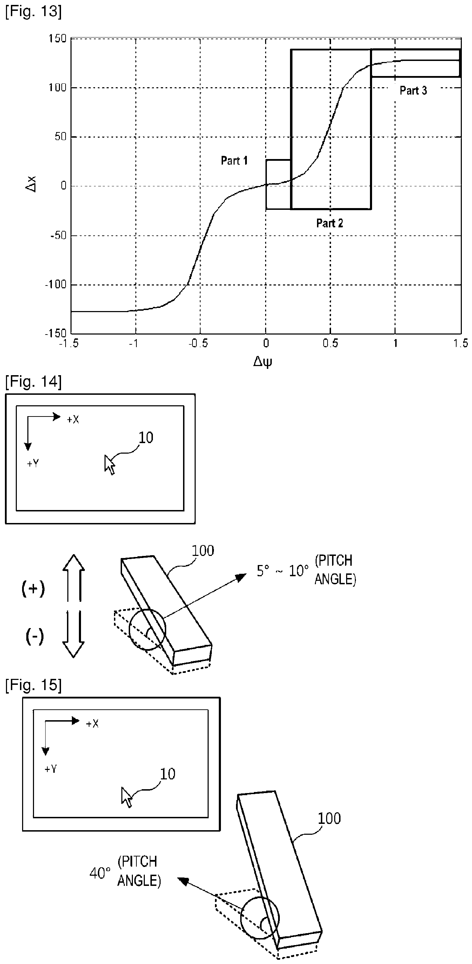

The mapping function of FIG. 13 is divided into three areas, which is more complicated than the functions of FIGS. 11 and 12. The first area (part 1) is a depression area that does the mapping after reducing the input value of the function. The second area (part 2) is a scaling area that maps the input value to a roughly proportional output value. Finally, the third area is a limitation area that limits the output value for the input more than a certain value.

An example of mapping functions of FIG. 13 is Sigmoid function such as

$$f(t) = \frac{1}{1 + e^{-t}} \, .$$

Here, there are both positive and negative movement directions, so the Sigmoid function is symmetrical on the starting point of the coordinates. That is, the mapping function of FIG. 13 is made of combination of the same two Sigmoid functions. It is desirable for a value determined as a HID (human interface device) mouse standard to be used as the position variation obtained by the mapping.

The meaning of three areas of FIG. 13 is explained in more detailed in the following. The first depression area is an area where the user's pointing movements are minute. In this area, the variation of the attitude angle is not mapped with the position variation by 1:1, but the mapping is done by reducing the position variation, which provides the function that removes unintended movements such as a trembling of a user's hand. However, in applications that need implementation of minute movements, such movements can be made to be expressed by raising up the depression area.

The second scaling area is an area that proportionally maps actual user movements to position information on the display device, and the mapping can be done by $\pm 128$ integer values according to HID mouse standard.

The third limitation region is an area that limits position variations ($\Delta x$, $\Delta y$) when the user's movements are relatively large. In FIG. 13, the mapping function has a symmetrical form for the starting point, so symmetrical outputs can be drawn in positive and negative directions for the user's movements.

Further, such a mapping function can be scaled in various ways in line with the user's movement pattern, which is explained in the following.

The user most comfortably grabs the device 100 when the pitch angle is 5° - 10° as shown in FIG. 14. However, if the pitch angle becomes 30° - 50°, the control of the pointer 10 toward Y-axis positive direction becomes relatively more difficult than the control of the pointer 10 toward the Y-axis negative direction. Likewise, the difficulty due to the limitation of the wrist movement in implementing the position information is called wrist jamming. The same wrist jamming can exist for each direction of the yaw ($\psi$)

FIG. 15 shows an example of such a wrist jamming. The device 100 is raised up about more than 40°, but the position of the pointer 10 on the display screen is positioned near the lower side of the display device. In this case, it becomes difficult for the user to move in the upper direction of the display device due to the limitation of the wrist movement.

Hence, in the device 100 according to an exemplary embodiment of the present invention, if the pitch angle exceeds a certain angle, the scale is increased for the movement that raises up in the positive pitch angle direction, the scale is decreased for the movement that lowers in the negative pitch angle direction, by which the user can continually point in the most comfortable state of 5° to 10° pitch angle.

The variation mapping unit 170 of the device 100 can simply do such operations by adjusting the mapping scale applied to the entire mapping functions. The adjustment of the mapping scale can be applied in various manners according to each set of pitch information, and the same can be applied even when the pitch angle is negative.

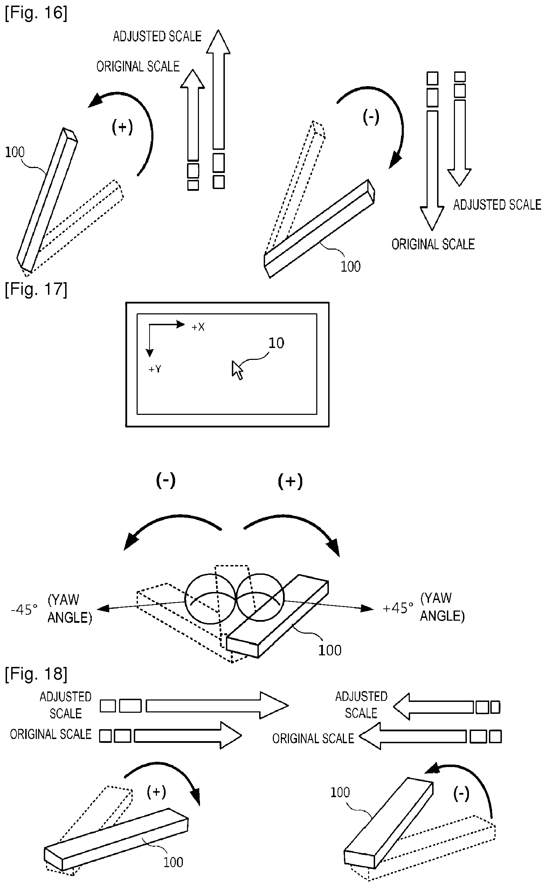

The technique used in the pitch ($\theta$) angle can be applied for the yaw ($\psi$) angle. In the case where the user operates the device 100, the movement is usually done between $\pm 45°$ in the yaw rotation direction as shown in FIG. 17. However, if the yaw angle of the device 100 exceeds the range, the user feels difficulty in pointing due to the limitation of the wrist movement.

Hence, in the device 100 according to an exemplary embodiment of the present invention, when the yaw angle exceeds a certain angle in the positive direction, the device increases the scale for the movement that rotates in the positive yaw angle direction and decrease the scale for the movement in the negative yaw angle direction. The same can be applied in the state where the yaw angle of the device 100 exceeds a certain angle in the negative direction. Hence, the user's pointing can be continued between $\pm 45°$ yaw angles when the user feels most comfortable. The variation mapping unit 170 of the device 100 can simply perform such an operation by adjusting the mapping scale applied to the entire mapping function.

Further, in the case where the device 100 is raised up by 90° in the pitch direction, the position variations ($\Delta x$, $\Delta y$) on the display screen can be made to be limited. For example, the variation mapping unit 170 can be made for the mapped position variations ($\Delta x$, $\Delta y$) not to be generated by setting $\Delta \psi$ and $\Delta \theta$ to "0" when $\theta$ is close to 90°. It is because there can be pointer movements unintended by the user as a singular point is generated in the third formula (a formula about $\psi$) of equation 6 when the pitch angle becomes 90°.

Such a problem can be solved if the calculation is done using a quaternion angle representation, instead of Euler angles, but the amount of calculation increases, so each method has advantages and disadvantages. However, the user rarely operates the pointer while grabbing the device perpendicularly, and even if it happens, it can be resolved by limiting the position variation as described above.

Referring to FIG. 2, the output unit 180 wirelessly transmits the attitude angles ($\varphi$, $\theta$, $\Psi$) provided from the attitude angle measuring unit 160 and the position variation ($\Delta x$, $\Delta y$) provided from the variation mapping unit to the display device depending on the type of the application. If the display device is integrally implemented with the device 100, the data can be transmitted to the main processor. The wireless transmission can be done through Bluetooth communication, infrared communication, IEEE 802.11 wireless LAN standard, IEEE 802.15.3. wireless LAN standard, etc.

Each block of FIG. 2 can be implemented by a task, a class, a sub-routine, a process, an object, an execution thread, software such as a program, hardware such as FPGA (field-programmable gate array) and ASIC (application-specific integrated circuit) or a combination of the software and the hardware performed in a predetermined area of a memory. Also, each block may represent a portion of code, a segment or a module including one or more executable instructions to execute specified logical functions. Also, in some alternative examples, the above-mentioned functions can occur regardless of the order. For example, two consecutive blocks may be practically performed at the same time, or may even be performed in a reverse order depending to their functions.

A user instruction input device according to an exemplary embodiment of the present invention has practical advantages as follows.

### 1. Simplified system

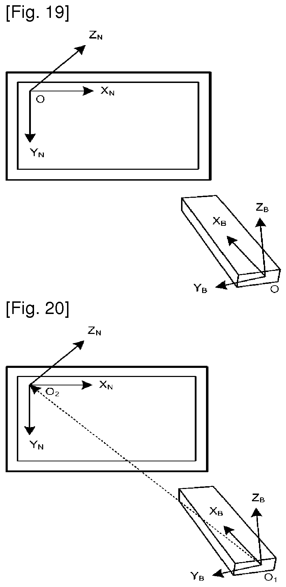

The user instruction input device 100 only uses the conversion for the rotation information between two coordinate systems (frame) in the process of converting the body information into the navigation frame. That is, the starting point of the body frame and the starting point of the navigation frame are kept in the same state as in FIG. 19. Likewise, when the coordinate system is converted, the change of the starting points ($O_2$-$O_1$ of FIG. 20) between two coordinate systems is omitted, so the amount of calculation can be reduced.

Also, as in equation 7, by using the concept of the weighted average, the movement estimation function and the mapping function, the complicated operations for sampling data, which is necessary for a model-based filtering such as linear filtering, Kalman filtering, Kalman smoothing, extended Kalman filtering, state-space estimation and expectation-maximization, and the following initialization time are not required.

Further, the movement estimation function and the mapping function use a simplified form of 1:1 correspondence function unlike the matrix operation that occupies many resources. Hence, as such a simplified function is used, the operation time and resources are significantly reduced.

## 2. Attitude angle in navigation frame

The user instruction input device 100 measures the rotation and acceleration of the body frame to calculate attitude information of the navigation frame. The position information (e.g., the movement of a pointer) is controlled through the obtained attitude information of the navigation frame, so the position information can be implemented regardless of the slant of the body frame. As stated above using the roll, pitch and yaw information (attitude angle information) in the navigation frame, various applications such as implementation of movements according to the user pattern, intuitive movement implementation and the control of the state of the display device are possible. Also, in the product design, there is no limitation on the rotation direction of the body frame, various designs regarding the outer appearance of the user instruction input device 100 are possible.

## 3. Movement detection

In the existing technology, a simple stoppage is determined, but in the user instruction input device 100, the various movements such as the stoppage, minute movements, slow movements and fast movements can be detected, and the basis for more improved movements is provided through such various forms of movement detections. Also, the movement estimation function used in detecting movements makes the input correspond to the output by 1:1, thereby not occupying many resources.

## 4. Mapping

The mapping function consisting of the depression area, the scaling area and the limitation area provides more detailed and intuitive movements. Movements such as a trembling of a hand are removed through the depression area, and minute movements can be implemented through the scaling area, and the limitation of excessive movements is possible through the limitation area. In such a mapping function, it is possible to only take values of desired areas.

Also, the mapping function can convert a floating point value into a normalized digital value, and through the digitalization, advantages of digital signals such as reduction of noise and reduction of transmitted data amount are provided. Also, the mapping function used here does note require a separate initialization time and data sampling as in a model-based filtering, and is a simplified function where the input corresponds to the output by 1:1.

## 5. Stable and accurate movement implementation using weighted averages

In the user instruction input device 100, the weighted average is calculated based on each set of information implemented by the output of the angular rate sensor and the output of the accelerometer, so more stable and accurate movements can be implemented. If only the angular rate is used, accumulated errors by the bias change are generated in the process of implementing angles by integrating angular rates, thereby generating divergence of angular rates, and there technologies to resolve such a problem are known. Some examples of such technologies are a method of estimating a bias through Kalman filter, a method of using a digital filter through frequency analysis and a method of estimating a bias by analyzing given time and critical values. However, all such existing technologies excessively consume system resources and require a large amount of operation.

In contrast, in the case of the user instruction input device 100, the concept of the weighted average is applied using the angular rate sensor and the accelerometer, so the divergence of the angle can be simply limited by the accelerometer, by which the model or the filter used in estimating the bias of the angular rate can be simplified, and the accuracy of the attitude angle measurement can be improved. Through the calculated attitude angle, more stable and accurate movements can be implemented.

Also, in the user instruction input device 100, if the movement is detected by the movement estimation function, the user-intended various movements can be expressed by changing each weight ($\alpha_1$, $\alpha_2$, $\alpha_3$ of equation 7) according to the detected movement. That is, appropriate movements harmonized with the situation can be implemented.

## 6. Reducing system initialization time

According to a simplified system of the user instruction input device 100, the initialization time of the device can be reduced. A representative example is the concept of a weighted average. If an angle is implemented only by an angular rate sensor, a separate filtering technique such as Kalman filtering is required to minimize accumulated errors. In the case of the Kalman filtering, the initialization step for the initial bias estimation or bias setting is essentially required.

In contrast, the user instruction command device 100 can calculate the accurate angle without such an initialization step by implementing each set of information using the weighted average with the output of the accelerometer along with the accelerometer. That is, the accuracy of the attitude angle measurement can be improved with the system is simplified.

Also, unlike the model-based filtering, the mapping function centers on 1:1 correspondence, so it contributes to initialization time reduction to some extent.

7. Reducing power consumption

According to a simplified system of the user instruction input device 100, the consumption power can be reduced based on the reduction of the initialization time and operation amount. As the initialization time of the system is reduced, there can be simplified operation modes such as operation mode, power-down mode and power-off mode.

The existing technologies needed temporary steps such as a stand-by mode that stabilizes the system for entering the operation mode. However, the user instruction input device 100 does not need a temporary step such as a stand-by mode, so the power supplied to a certain element can be selectively turned off. Hence, if the on-off of the device power gets easy, the consumption power can be more reduced.

It should be understood by those of ordinary skill in the art that various replacements, modifications and changes may be made in the form and details without departing from the scope of the present invention as defined by the following claims. Therefore, it is to be appreciated that the above described embodiments are for purposes of illustration only and are not to be construed as limitations of the invention.

**Industrial Applicability**

According to the user command input system and method using a pointing device according to the present invention, in a device that inputs user commands on a three-dimensional space, the object of on the display apparatus can be controlled to fit the user's intuitive senses.

**Claims**

1. A user instruction input device (100) comprising:

   an angular rate sensor (110) adapted to sense an angular rate at which the device (100) rotates in the body frame to provide a first output;
   an acceleration sensor (120) adapted to sense an acceleration of the device (100) in the body frame to provide a second output;
   a processing unit (190) adapted to
   calculate a first rotation angle in the navigation frame from the first output of the angular rate sensor (110),
   calculate a second rotation angle in the navigation frame from the second output of the acceleration sensor (120), and
   obtain an attitude angle estimate by computing a weighted average of the first rotation angle and the second rotation angle,
   wherein the processing unit (190) is further adapted to determine a first weight for the first rotation angle and a second weight for the second rotation angle based on one of the first output, the second output and a combination thereof, such that the first and second weights satisfy the conditions that (i) the first and second weights are greater than or equal to 0 and less than or equal to 1, (ii) a sum of the first and second weights is equal to 1, and (iii) as said one of the first output, the second output and the combination thereof becomes larger, the second weight becomes smaller, and wherein the processing unit is further adapted to compute the weighted average with the determined first and second weights.

2. The device (100) of claim 1, wherein the first rotation angle includes three rotation angles ($\Phi_G$, $\theta_G$, $\Psi_G$) in the navigation frame.

3. The device (100) of claim 1, wherein the second rotation angle includes three rotation angles ($\Phi_{XL}$, $\theta_{XL}$, $\Psi_{XL}$) in the navigation frame.

4. The device (100) of claim 2, wherein the first weight includes three weights each for a respective one of the three rotation angles ($\Phi_G$, $\theta_G$, $\Psi_G$).

5. The device (100) of claim 3, wherein the second weight includes three weights each for a respective one of the three rotation angles ($\Phi_{XL}$, $\theta_{XL}$, $\Psi_{XL}$).

6. The device (100) of claim 1, wherein the device (100) is operable in conjunction with a display device so that a movement of the device (100) triggers a movement of an object on the display device.

7. The device (100) of claim 6, wherein the attitude angle estimate includes at least yaw ($\Psi$) and pitch ($\theta$) estimates of the device (100), and the processing unit (190) is further adapted to detect a variation in yaw and pitch of the device (100) based on the yaw ($\Psi$) and pitch ($\theta$) estimates of the device (100), calculate a position variation ($\Delta x$, $\Delta y$) for the object from the variation in yaw and pitch of the device (100) and output the position variation ($\Delta x$, $\Delta y$) to the display device so that the object on the display device is moved correspondingly.

8. The device (100) of claim 6 or 7, wherein the object is a pointer.

9. The device (100) of claim 7, wherein the processing unit (190) is further adapted to perform mapping upon the variation in yaw and pitch of the device (100) according to a predetermined mapping function to provide the position variation ($\Delta x$, $\Delta y$) for the object.

10. The device (100) of claim 9, wherein the predetermined mapping function has at least one of a depression area and a limitation area and wherein (i) if the variation in yaw and pitch of the device (100) falls within the depression area, the variation in yaw and pitch of the device (100) is mapped to a depressed position variation according to the predetermined mapping function and (ii) if the variation in yaw and pitch of the device (100) falls within the limitation area, the variation in yaw and pitch of the device (100) is mapped to a limited position variation according to the predetermined mapping function.

11. The device (100) of claim 1, wherein the processing unit (190) is further adapted to determine the second weight based on a predetermined movement estimation function wherein the predetermined movement estimation function maps said one of the first output, the second output, and the combination thereof to the second weight.

12. The device (100) of claim 11, wherein the predetermined movement estimation function is one selected from the group consisting of a bell shape curve, an exponential function, a Gaussian function, and a raised cosine function.

**Patentansprüche**

1. Benutzeranweisungseingabevorrichtung (100), umfassend:

   einen Drehratensensor (110), der dazu ausgelegt ist, eine Drehrate zu erfassen, mit der die Vorrichtung (100) sich in einem Aufbaurahmen dreht, um eine erste Ausgangsgröße bereitzustellen;
   einen Beschleunigungssensor (120), der dazu ausgelegt ist, eine Beschleunigung der Vorrichtung (100) in dem Aufbaurahmen zu erfassen, um eine zweite Ausgangsgröße bereitzustellen;
   eine Verarbeitungseinheit (190), die für Folgendes ausgelegt ist: Berechnen eines ersten Drehwinkels in einem Navigationsrahmen aus der ersten Ausgangsgröße des Drehratensensors (110),
   Berechnen eines zweiten Drehwinkels in dem Navigationsrahmen aus der zweiten Ausgangsgröße des Beschleunigungssensors (120) und
   Erhalten eines Stellungswinkelschätzwerts durch Berechnen eines gewichteten Durchschnitts des ersten Drehwinkels und des zweiten Drehwinkels,
   wobei die Verarbeitungseinheit (190) weiterhin dazu ausgelegt ist, basierend auf der ersten Ausgangsgröße, der zweiten Ausgangsgröße oder einer Kombination derselben ein erstes Gewicht für den ersten Drehwinkel und ein zweites Gewicht für den zweiten Drehwinkel zu bestimmen, derart dass das erste und zweite Gewicht die Bedingungen erfüllen, dass (i) das erste und zweite Gewicht größer als oder gleich 0 sind und kleiner als oder gleich 1 sind, (ii) eine Summe des ersten und zweiten Gewichts gleich 1 ist und (iii) wenn die erste Ausgangsgröße, die zweite Ausgangsgröße oder die Kombination derselben größer wird, das zweite Gewicht kleiner wird, und wobei die Verarbeitungseinheit weiterhin dazu ausgelegt ist, mit dem bestimmten ersten und zweiten Gewicht den gewichteten Durchschnitt zu berechnen.

2. Vorrichtung (100) nach Anspruch 1, wobei der erste Drehwinkel drei Drehwinkel ($\Phi_G$, $\theta_G$, $\Psi_G$) in dem Navigationsrahmen umfasst.

3. Vorrichtung (100) nach Anspruch 1, wobei der zweite Drehwinkel drei Drehwinkel ($\Phi_{XL}$, $\theta_{XL}$, $\Psi_{XL}$) in dem Navigationsrahmen umfasst.

4. Vorrichtung (100) nach Anspruch 2, wobei das erste Gewicht drei Gewichte, jedes für einen entsprechenden der drei Drehwinkel ($\Phi_G$, $\theta_G$, $\Psi_G$) umfasst.

5. Vorrichtung (100) nach Anspruch 3, wobei das zweite Gewicht drei Gewichte, jedes für einen entsprechenden der drei Drehwinkel ($\Phi_{XL}$, $\theta_{XL}$, $\Psi_{XL}$) umfasst.

6. Vorrichtung (100) nach Anspruch 1, wobei die Vorrichtung (100) in Verbindung mit einer Anzeigevorrichtung betreibbar ist, so dass eine Bewegung der Vorrichtung (100) eine Bewegung eines Objekts auf der Anzeigevorrichtung bewirkt.

7. Vorrichtung (100) nach Anspruch 6, wobei der Stellungswinkelschätzwert wenigstens Schätzwerte eines Gierwinkels ($\Psi$) und Nickwinkels ($\theta$) der Vorrichtung (100) umfasst und die Verarbeitungseinheit (190) weiterhin dazu ausgelegt ist, basierend auf den Schätzwerten des Gierwinkels ($\Psi$) und Nickwinkels ($\theta$) der Vorrichtung (100) eine Änderung des Gier- und Nickwinkels der Vorrichtung (100) zu erkennen, aus der Änderung des Gier- und Nickwinkels der Vorrichtung (100) eine Positionsänderung ($\Delta x$, $\Delta y$) für das Objekt zu berechnen und die Positionsänderung ($\Delta x$, $\Delta y$) an die Anzeigevorrichtung auszugeben, so dass das Objekt auf der Anzeigevorrichtung entsprechend bewegt wird.

8. Vorrichtung (100) nach Anspruch 6 oder 7, wobei das Objekt ein Zeiger ist.

9. Vorrichtung (100) nach Anspruch 7, wobei die Verarbeitungseinheit (190) weiterhin dazu ausgelegt ist, ein Mapping bezüglich der Änderung des Gier- und Nickwinkels der Vorrichtung (100) gemäß einer vorgegebenen Mappingfunktion durchzuführen, um die Positionsänderung ($\Delta x$, $\Delta y$) für das Objekt bereitzustellen.

10. Vorrichtung (100) nach Anspruch 9, wobei die vorgegebene Mappingfunktion einen Vertiefungsbereich und/oder einen Begrenzungsbereich aufweist und wobei (i) wenn die Änderung des Gier- und Nickwinkels der Vorrichtung (100) in den Vertiefungsbereich fällt, die Änderung des Gier- und Nickwinkels der Vorrichtung (100) gemäß der vorgegebenen Mappingfunktion einer Änderung hin zu einer vertieften Position zugeordnet wird und (ii) wenn die Änderung des Gier- und Nickwinkels der Vorrichtung (100) in den Begrenzungsbereich fällt, die Änderung des Gier- und Nickwinkels der Vorrichtung (100) gemäß der vorgegebenen Mappingfunktion einer Änderung hin zu einer begrenzten Position zugeordnet wird.

11. Vorrichtung (100) nach Anspruch 1, wobei die Verarbeitungseinheit (190) weiterhin dazu ausgelegt ist, basierend auf einer vorgegebenen Bewegungschätzungsfunktion das zweite Gewicht zu bestimmen, wobei die vorgegebene Bewegungschätzungsfunktion die erste Ausgangsgröße, die zweite Ausgangsgröße oder die Kombination derselben dem zweiten Gewicht zuordnet.

12. Vorrichtung (100) nach Anspruch 11, wobei die vorgegebene Bewegungschätzungsfunktion eine aus der Gruppe bestehend aus einer Glockenkurve, einer Exponentialfunktion, einer Gauß-Funktion und einer Raised-Cosine-Funktion ausgewählte ist.

**Revendications**

1. Un dispositif d'entrée d'instructions d'utilisateur (100) comprenant :

    un capteur de vitesse angulaire (110) adapté pour détecter une vitesse angulaire à laquelle le dispositif (100) tourne dans une ossature de caisse pour fournir une première sortie ;
    un capteur d'accélération (120) adapté pour détecter une accélération du dispositif (100) dans l'ossature de caisse pour fournir une deuxième sortie ;
    une unité de traitement (190) adaptée pour calculer un premier angle de rotation dans une ossature de navigation à partir de la première sortie du capteur de vitesse angulaire (110),
    calculer un deuxième angle de rotation dans l'ossature de navigation à partir de la deuxième sortie du capteur d'accélération (120), et
    obtenir une estimation d'angle d'orientation en calculant une moyenne pondérée du premier angle de rotation et du deuxième angle de rotation,

l'unité de traitement (190) étant en outre adaptée pour déterminer une première pondération du premier angle de rotation et une deuxième pondération du deuxième angle de rotation basée sur une donnée parmi la première sortie, la deuxième sortie et une combinaison des deux, de telle sorte que les première et deuxième pondérations remplissent les conditions telles que (i) les première et deuxième pondérations sont supérieures ou égales à 0 et inférieures ou égales à 1, (ii) une somme des première et deuxième pondérations est égale à 1, et (iii) lorsque lesdites première sortie, deuxième sortie et la combinaison des deux augmentent, la deuxième pondération diminue, et l'unité de traitement étant de plus adaptée pour calculer la moyenne pondérée avec les première et deuxième pondérations déterminées.

2. Dispositif (100) selon la revendication 1, le premier angle de rotation comprenant trois angles de rotation ($\Phi_G$, $\theta_G$, $\Psi_G$) dans l'ossature de navigation.

3. Dispositif (100) selon la revendication 1, le deuxième angle de rotation comprenant trois angles de rotation ($\Phi_{XL}$, $\theta_{XL}$, $\Psi_{XL}$) dans l'ossature de navigation.

4. Dispositif (100) selon la revendication 2, la première pondération comprenant trois pondérations chacune pour l'un des trois angles de rotation ($\Phi_G$, $\theta_G$, $\Psi_G$) respectifs.

5. Dispositif (100) selon la revendication 3, la deuxième pondération comprenant trois pondérations chacune pour l'un des trois angles de rotation ($\Phi_{XL}$, $\theta_{XL}$, $\Psi_{XL}$) respectifs.

6. Dispositif (100) selon la revendication 1, le dispositif (100) étant opérable en conjonction avec un dispositif d'affichage de telle sorte que le mouvement du dispositif (100) déclenche un mouvement d'un objet sur le dispositif d'affichage.

7. Le dispositif (100) selon la revendication 6, l'estimation d'angle d'orientation comprenant au moins des estimations d'embardée ($\Psi$) et de tangage ($\theta$) du dispositif (100), et l'unité de traitement (190) étant en outre adaptée pour détecter une variation dans l'embardée et le tangage du dispositif (100) basée sur les estimations d'embardée ($\Psi$) et de tangage ($\theta$) du dispositif (100), calculer une variation de position ($\Delta x$, $\Delta y$) pour l'objet de la variation en embardée et en tangage du dispositif (100) et sortir la variation de position ($\Delta x$, $\Delta y$) sur le dispositif d'affichage de telle sorte que l'objet sur le dispositif d'affichage est déplacé de façon correspondante.

8. Dispositif (100) selon la revendication 6 ou 7, l'objet étant un pointeur.

9. Dispositif (100) selon la revendication 7, l'unité de traitement (190) étant en outre adaptée pour effectuer une mise en correspondance à partir de la variation d'embardée et de tangage du dispositif (100) selon une fonction de mise en correspondance prédéterminée afin de fournir une variation de position ($\Delta x$, $\Delta y$) pour l'objet.

10. Le dispositif (100) selon la revendication 9, la fonction de mise en correspondance prédéterminée ayant au moins une zone de dépression et une zone de limitation et, (i) si la variation d'embardée et de tangage du dispositif (100) se trouve dans la zone de dépression, la variation d'embardée et de tangage du dispositif (100) mise en correspondance avec une variation de position déprimée selon la fonction de mise en correspondance prédéterminée et (ii) si la variation d'embardée et de tangage du dispositif (100) se trouve dans la zone de limitation, la variation d'embardée et de tangage du dispositif (100) est mise en correspondance avec une variation de position limitée selon la fonction de mise en correspondance prédéterminée.

11. Le dispositif (100) selon la revendication 1, l'unité de traitement (190) étant en outre adaptée pour déterminer la deuxième pondération basée sur une fonction d'estimation de mouvement prédéterminée, la fonction d'estimation de mouvement prédéterminée mettant en correspondance avec la deuxième pondération ladite une donnée parmi la première sortie, la deuxième sortie et la combinaison des deux.

12. Dispositif (100) selon la revendication il, la fonction d'estimation de mouvement prédéterminée étant une fonction sélectionnée parmi le groupe se composant d'une courbe en cloche, d'une fonction exponentielle, d'une fonction gaussienne et d'une fonction en cosinus surélevé.

[Fig. 1]

Z   YAW(Ψ)

ROLL(φ)

PITCH(θ)

X

Y

[Fig. 2]

USER INSTRUCTION INPUT DEVICE (100)

PROCESSING UNIT (190)

| ANGULAR RATE SENSOR (110) |
| ACCELERATION SENSOR (120) |

FILTERING UNIT (130)

$\omega_x, \omega_y, \omega_z$

$f_x, f_y, f_z$

FIRST OPERATION UNIT (140)

SECOND OPERATION UNIT (150)

ATTITUDE ANGLE MEASURING UNIT (160)

VARIATION MAPPING UNIT (170)

OUTPUT UNIT (180)

$\Delta x, \Delta y, \varphi, \theta, \Psi$

[Fig. 3]

(a)

(b)

(c)

[Fig. 4]

(a)

(b)

[Fig. 5]

NO. OF SAMPLING DATA

ABOUT 10 SAMPLES DELAY

[Fig. 6]

NO. OF SAMPLING DATA

ABOUT 10 SAMPLES DELAY

[Fig. 7]

NO. OF SAMPLING DATA

ABOUT 10 SAMPLES DELAY

[Fig. 8]

[Fig. 9]

[Fig. 10]

[Fig. 11]

[Fig. 12]

[Fig. 13]

[Fig. 14]

[Fig. 15]

[Fig. 16]

ADJUSTED SCALE

ORIGINAL SCALE

(+)

100

(-)

ADJUSTED SCALE

ORIGINAL SCALE

100

[Fig. 17]

+X

+Y

10

(-)

(+)

-45° (YAW ANGLE)

+45° (YAW ANGLE)

100

[Fig. 18]

ADJUSTED SCALE

ORIGINAL SCALE

ADJUSTED SCALE

ORIGINAL SCALE

(+)

100

100

(-)

[Fig. 19]

[Fig. 20]

**EP 2 353 063 B1**

REFERENCES CITED IN THE DESCRIPTION

**Patent documents cited in the description**

- US 2005212767 A1